Europäisches Patentamt

European Patent Office

Office européen des brevets

(19)

(11) Veröffentlichungsnummer: **0 263 972**
**A2**

(12) **EUROPÄISCHE PATENTANMELDUNG**

(21) Anmeldenummer: **87113137.1**

(22) Anmeldetag: **08.09.87**

(51) Int. Cl.⁴ **H04M 3/58**

(30) Priorität: **11.09.86 DE 3630989**

(43) Veröffentlichungstag der Anmeldung:
**20.04.88 Patentblatt 88/16**

(84) Benannte Vertragsstaaten:
**DE GB NL**

(71) Anmelder: **Siemens Aktiengesellschaft Berlin und München**
**Wittelsbacherplatz 2**
**D-8000 München 2(DE)**

(72) Erfinder: **Strzeletz, Wolfgang, Dipl.-Ing.**
**Knufstrasse 18**
**D-4290 Bocholt(DE)**

(54) **Elektronische Halteschaltung für über die Teilnehmerleitung gespeiste Zweiwegefernsprecher.**

(57) Die Erfindung betrifft eine elektronische Halteschaltung für einen über die Teilnehmerleitung gespeisten, mikroprozessorgesteuerten Zweiwegefernsprecher mit Tastenblock für Teilnehmerwahl und Sonderdienst.

Die Aufgabe besteht darin, mit einfachen, integrierbaren Schaltmitteln die Halteschaltung zu erstellen, wobei als Bedienelemente nur Tastenelemente verwendet werden, die nur für sehr geringe Stromstärken ausgelegt sind und keinen konstruktiven Aufwand bedingen.

Die Lösung erfolgt dadurch, daß mit Tasten des Tastenblocks Anreize an den Mikrocomputer gegeben werden, der über Impulse die Zu-bzw. Abschaltung eines Strompfades mit Lastwiderstand zwischen den a/b-Adern der jeweiligen Teilnehmerleitung steuert, wobei zur Entkopplung von Station und Teilnehmerleitung, bezogen auf Hochspannung, optisch gesteuerte Transistorelemente verwendet werden.

Die Anwendung kann grundsätzlich bei Zweiwegefernsprechern mit Rückfrage und Makeln erfolgen

## Elektronische Halteschaltung für über die Teilnehmerleitung gespeiste Zweiwegefernsprecher

Die Erfindung betrifft eine elektronische Halteschaltung für einen über die Teilnehmerleitung gespeisten Zweiwegefernsprecher mit Mikroprozessorsteuerung, mit einer Gleichrichterbrücke je Teilnehmerleitung als Verpolungsschutz, mit einem Tastenblock für die Teilnehmerwahl und für Sonderfunktionen, mit der notwendigen Sprechschaltung und mit einer Umschalteinrichtung zum Umschalten von einer Teilnehmerleitung auf die andere Teilnehmerleitung.

Obengenannte Fernsprechstationen sind als Zweiwegefernsprecher bekannt (Zweiwegefernsprecher, Bedienungsanleitung der Deutschen Bundespost FeTAp2-716-719), wobei die einzelnen Teilnehmerleitungen beispielsweise mit Hilfe verrastbarer Tasten wahlweise angeschaltet werden und wobei bei Rückfrage oder beim Makeln die zwischen den a/b-Adern notwendigen Haltewiderstände durch Kontakte der Tasten oder durch Relaiskontakte an-und abgeschaltet werden.

Bei der Verwendung von Kontakten rastender Tasten ist konstruktiver Aufwand sowohl zum An- als auch zum Abschalten des Haltewiderstandes notwendig. Die Realisierung der Schaltvorgänge mit Relais erfordert eine relativ hohe Schaltleistung, die bei leitungsgespeisten Fernsprechstationen entweder nicht oder doch nicht schnell genug zur Verfügung steht.

Die Aufgabe der Erfindung soll daher darin bestehen, eine Schaltungsanordnung für eine obengenannte Halteschaltung zu finden, die mit sehr geringer Leistungsaufnahme betreibbar ist, die mit geringer Leistung ansteuerbar ist, wobei außerdem die Teilnehmerleitung und die Sprechschaltung der Fernsprechstation hochspannungsfest voneinander getrennt sind und wobei zum Auslösen der Steuerung der Halteschaltung an der Fernsprechstation vorhandene, nur für die Schaltung von sehr geringen Leitungen ausgelegte Schaltmittel verwendet werden können.

Dies wird dadurch erreicht, daß zwischen den Adern jeder Teilnehmerleitung je eine Halteschaltung vorgesehen ist, die aus der Serienschaltung eines optisch ansteuerbaren Thyristors, eines Lastwiderstandes und eines Längstransistors besteht, wobei der Basisstrom für den Längstransistor von dem Haltestrom des Thyristors abgezweigt ist, daß im Basisstromkreis ein als Schalter wirkender Transistor-Optokoppler angeordnet ist und daß sowohl der Thyristor als auch der Transistor-Optokoppler über je eine Steuerleitung mit Steuerausgängen des Mikroprozessors verbunden sind.

Hieraus ergibt sich der Vorteil, daß die Einheit zum Zu-und Abschalten der Haltewiderstände in einfacher Weise ohne zusätzlichen konstruktiven Aufwand, ohne leistungsfeste Schaltmittel und außerdem mit integrierbaren Elementen ausgeführt werden kann.

Nachstehend wird die Funktion der erfindungsgemäßen Schaltungsanordnung anhand einer Figur näher erläutert.

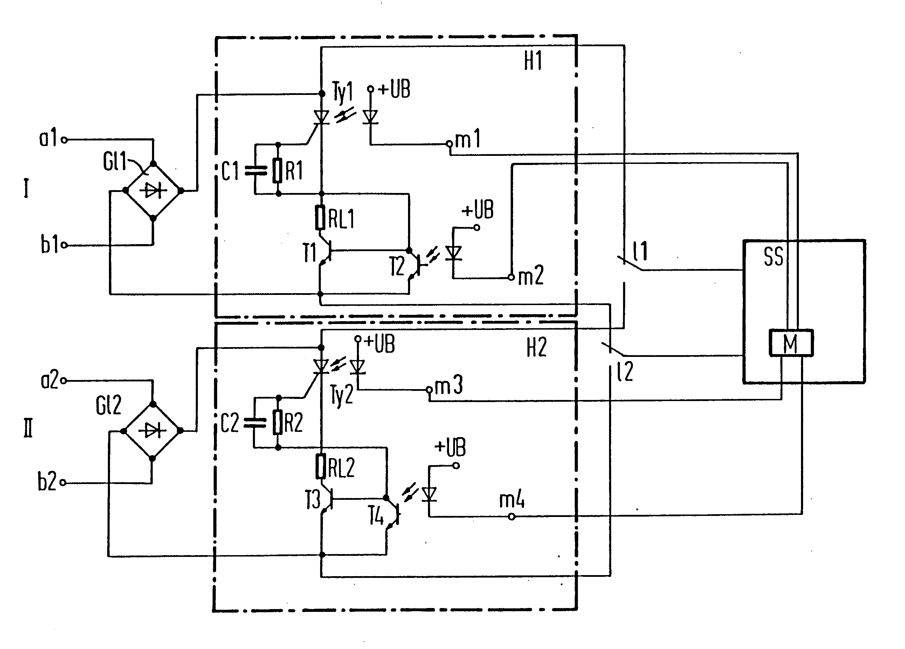

Die Figur zeigt die Sprechschaltung SS einer Fernsprechstation mit dem Mikroprozessor M, zwei Umschaltkontakte I1 und I2 zum wahlweisen Anschalten der beiden Teilnehmerleitungen I und II, zwei Gleichrichterbrücken Gl1 und Gl2 und zwei Halteschaltungen H1 und H2. Die Halteschaltungen H1 und H2 bestehen aus je einem optisch ansteuerbaren Thyristor Ty1 und Ty2, je einem Lastwiderstand RL1 und RL2, je einem Längstransistor T1 und T3, je einem Transistor-Optokoppler T2 und T4, je einem Haltstromkreis C1/R1 und je zwei Ansteuerpunkten m1/m2 und m3/m4.

Die Funktion der Schaltungsanordnung wird nachstehend erläutert.

Im Ruhezustand der Schaltungsanordnung für die Halteschaltung sind für beide Teilnehmerleitungen die Thyristoren Ty1 und Ty2 und die Längstransistoren T1 und T3 im Sperrzustand. Je nach Lage der Anschaltkontakte I1 und I2 kann die Teilnehmerleitung I oder II angeschaltet werden. Nach der Figur wäre die Teilnehmerleitung I angeschaltet und es kann über diese mit Hilfe des Tastenblockes eine Fernsprechverbindung hergestellt werden. Es wird angenommen, daß nach der Verbindungsherstellung über die Teilnehmerleitung II eine Rückfrage stattfinden soll und daß durch die Bedienungsperson, um dies zu erreichen, eine hierfür vorgesehene Taste des Tastenblockes betätigt wird. In Abhängigkeit von dem augenblicklichen Betriebszustand der Fernsprechstation erkennt der Mikroprozessor M den Teilnehmerwunsch, nämlich daß die bisher belegte Teilnehmerleitung I in Wartezustand weiterhin belegt bleiben soll und daß über die Teilnehmerleitung II eine Rückfrageverbindung aufgebaut werden soll. In nicht dargestellter Weise wird über die Umschaltkontakte I1/I2 die Teilnehmerleitung I von der Sprechschaltung SS abgeschaltet und die Teilnehmerleitung II zwecks Verbindungsaufbau angeschaltet. Damit die Teilnehmerleitung I weiterhin in Wartezustand belegt bleibt, muß die Halteschaltung H1 jetzt wirksam sein. Dieses Wirksamschalten von H1 erfolgt kurz vor Abschalten der Teilnehmerleitung I von der Sprechschaltung SS durch den Mikroprozessor M. Über den Anschlußpunkt m1 der Halteschaltung vom Mikroprozessor M wird die Aussendung eines Impulses auf den optisch gesteuerten und damit optisch zündbaren (UB = Betriebsspannung) Thyristor Ty1 veranlaßt, wobei Ty1 durchschaltet und durch einen über C1 und R1 bestimmten Haltestrom durchgeschaltet bleibt. Der Strompfad für den über den Gleichrichter Gl1 anliegenden Gleichstrom verläuft über den Thyristor Ty1, den Lastwiderstand RL1 und den Längstransistor T1, da letzterer leitend geschaltet ist. Zum Leitendschalten von T1 wird ein Teil des Haltestromes von Ty1 abgezweigt und wirkt als Basisstrom von T1. Zur Fernsprechzentrale hin wird somit der Lastwiderstand RL1 wirksam, wodurch die Teilnehmerleitung TI (a1/b1) in Wartezustand gehalten wird. Soll nun beispielsweise die Teilnehmerleitung I wieder zur Fortführung des Gespräches angeschaltet und die Teilnehmerleitung II in Wartezustand gebracht werden (makeln), dann wird dies wiederum durch Zeichengabe über den Tastenblock an den Mikroprozessor M eingeleitet. Die Umschaltkontakte I1/I2 schalten um. Gleichzeitig wird ein Impuls zum Anschlußpunkt m2 der Halteschaltung H1 veranlaßt, wodurch der Transistor-Optokoppler T2 durchgeschaltet wird. Damit wird der Basisstrom für den Längstransistor T1 zu dessen Emitter abgeleitet, der Längstransistor T1 unterbricht den Strompfad für den Thyristor Ty1 und der Lastwiderstand RL1 ist aus der Teilnehmerleitung I herausgenommen. Zusätzlich wird der Anschlußpunkt m3 der Halteschaltung durch einen Impuls angesteuert, so daß nun der Thyristor Ty2 zündet, einen Haltestrom bildet (C2/R2), woraus anteilig wieder ein Basisstrom für den Längstransistor T3 entsteht, der durchschaltet, so daß der Lastwiderstand RL2 der Gleichrichterbrücke Gl2 nachgeschaltet in der Teilnehmerschleife (von II) liegt. Ein Herausnehmen des Lastwiderstandes RL2 bei Freischalten der Teilnehmerleitung II oder bei deren erneuten Aufschaltung für ein weiteres Gespräch erfolgt - veranlaßt über den Gabelumschalter oder den Tastenblock-durch Wirksamwerden des Mikroprozessors M über den Anschlußpunkt m4 der Halteschaltung H2, indem der Transistor-Optokoppler T4 durchlässig wird, den Basisstrom von T3 ableitet und damit diesen und als Folge den Thyristor T2 in Sperrzustand schaltet. Damit ist der Lastwiderstand RL2 aus der Teilnehmerleitung II (a2/b2) genommen.

Aus dem Vorstehenden ist zu entnehmen, daß die erfindungsgemäße Halteschaltung in einfacher Weise mit nur für geringe Stromstärken ausgelegten Schaltmitteln steuerbar ist (Tasten mit Gummimatritzen), daß sie mit einfachen, integrierbaren Bausteinen realisierbar ist und daß kein besonderer konstruktiver Aufwand notwendig ist

## Ansprüche

Elektronische Halteschaltung für einen über die Teilnehmerleitung gespeisten Zweiwegefernsprecher mit Mikroprozessorsteuerung, mit einer Gleichrichterbrücke je Teilnehmerleitung als Verpolungsschutz, mit einem Tastenblock für die Teilnehmerwahl und für Sonderfunktionen, mit der notwendigen Sprechschaltung und mit einer Umschalteinrichtung zum Umschalten von einer Teilnehmerleitung auf die andere Teilnehmerleitung,

**dadurch gekennzeichnet,** daß zwischen den Adern (a1/b1, a2/b2) jeder Teilnehmerleitung (I,II) je eine Halteschaltung (H1, H2) vorgesehen ist, die aus der Serienschaltung eines optisch ansteuerbaren Thyristors (Ty1,Ty2), eines Lastwiderstandes (RL1,RL2) und eines Längstransistors (T1,T3) besteht, wobei der Basisstrom für den Längstransistor (T1,T3) von dem Haltestrom des Thyristors (Ty1,Ty2) abgezweigt ist, daß im Basisstromkreis ein als Schalter wirkender Transistor-Optokoppler (T2,T4) angeordnet ist und daß sowohl der Thyristor (Ty1,Ty2) als auch der Transistor-Optokoppler (T2,T4) über je eine Steuerleitung (m1/m2, m3/m4) mit Steuerausgängen des Mikroprozessors verbunden sind.

0 263 972